Europäisches Patentamt

European Patent Office

Office européen des brevets

(19)

(11) Publication number: **0 023 001**
**B1**

(12) **EUROPEAN PATENT SPECIFICATION**

(45) Date of publication of patent specification: **21.11.84**

(51) Int. Cl.³: **F 23 D 11/00,** F 23 D 11/44

(21) Application number: **80104045.2**

(22) Date of filing: **12.07.80**

(54) **Liquid fuel burner for generating a blue flame.**

(30) Priority: **20.07.79 IT 8494779**
**17.06.80 IT 8494180**

(43) Date of publication of application:
**28.01.81 Bulletin 81/04**

(45) Publication of the grant of the patent:
**21.11.84 Bulletin 84/47**

(84) Designated Contracting States:
**AT BE CH DE FR GB LI LU NL SE**

(56) References cited:
**CH-A- 402 255**
**DE-A-1 401 841**
**DE-A-2 365 186**
**DE-A-2 403 485**
**DE-A-2 717 171**
**DE-B-1 068 850**
**GB-A- 948 075**
**GB-A- 968 359**
**GB-A-1 367 974**
**US-A-1 855 339**

(73) Proprietor: **Zampieri, Placido**
**Via Gaetano Trezza, 7**
**I-37100 Verona (IT)**

(72) Inventor: **Zampieri, Placido**
**Via Gaetano Trezza, 7**
**I-37100 Verona (IT)**

(74) Representative: **Modiano, Guido et al**
**MODIANO & ASSOCIATI S.A.S. Via Meravigli, 16**
**I-20123 Milan (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a liquid fuel (gas oil) burner for generating a clear blue flame. The burner is specially suitable for use with a heat accumulator, such as a boiler.

With conventional blue flame burners, it may happen that, when starting them from cold, the fuel cannot be adequately atomized owing to its being too thick, which can create starting difficulties or make the burner starting altogether impossible.

This state of the art is summarised by the pre-characterising part of appended claim 1 disclosed in part by DE—A—2365186.

This invention sets out to eliminate or at least substantially mitigate the problem of feeding pressurised primary and secondary air.

The invention solves this problem by means of the features defined in the characterising part of claim 1.

Further aspects and advantages of the invention will become more clearly apparent from the following detailed description of a preferred but not limitative embodiment thereof, with reference to the accompanying drawings, where:

Figure 1 is a perspective right-hand side view of a burner assembly according to this invention;

Figure 2 is a longitudinal section view along an axial vertical plane and to an enlarged scale of the burner of Figure 1 and of the blower, as taken along the line II—II of Figure 6;

Figure 3 is a longitudinal section view of a detail of Figure 2;

Figure 4 is a perspective view of an electrode holder element defining the combustion chamber of the burner;

Figure 5 is an enlarged scale cross-sectional view taken along the line V—V of Figure 2;

Figure 6 is a cross-sectional view taken along a vertical and axial plane VI—VI through the blower of Figure 2; and

Figure 7 is a front view of an inlet and air valve.

With reference to the drawing figures, a burner assembly according to the invention comprises a burner 1 proper, a blower 2, a fuel (gas oil) pump 3, a box 4 for the electronic control circuitry, and a box 5 for a timer.

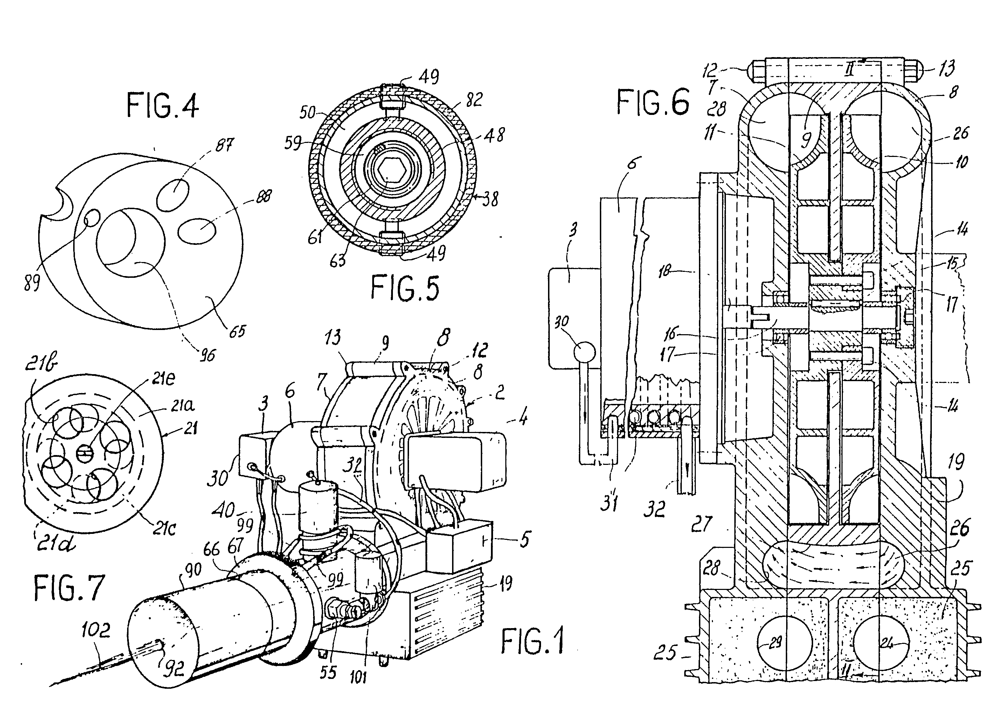

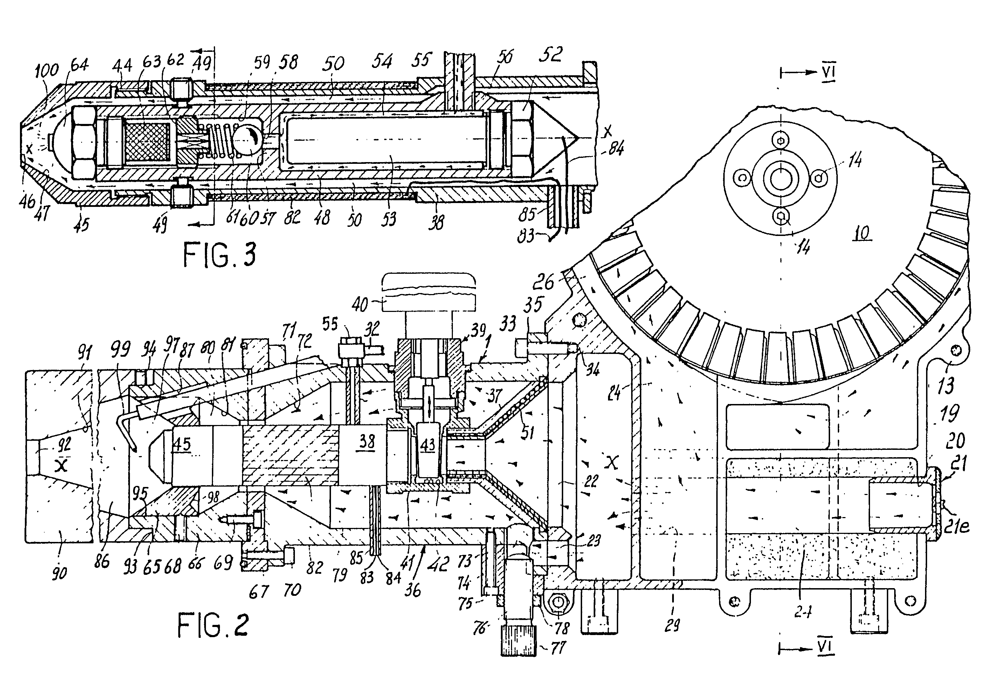

The blower 2 and pump 3 can be driven by a common electric motor 6. The blower 2 is a two-stage one, the air drawn thereinto being compressed in two successive stages, that is along two serially connected paths. To this aim, the blower (Figures 1, 2 and 6) comprises three fixed structural elements, namely two box-like side members 7 and 8 and an intermediate spacer-partition 9, and a rotatable assembly including two fans or impellers 10 and 11 arranged on opposite sides with respect to the partition 9. The three fixed elements are held together by bolts or screws 12 seated in special lugs 13 suitably provided along the periphery of the fixed elements. The fans 10 and 11 are instead clamped together by means of screws 14 and are keyed by means of a key 15 (Figure 6) to a shaft 16 which is rotatably carried in ball bearings 17 mounted on the side members 7 and 8. The shaft 16 is coupled directly to the output shaft 18 of the motor 6.

The fixed or stationary elements 7, 8 and 9 define, below the fans 10 and 11, a box 19 having a rear mouth or port 20 equipped with a throttling valve 21, acting as an air intake valve, and two front mouths or ports 22 and 23 for the delivery of pressurized air (Figure 2). The valve 21 (Figure 7) is a metering valve and may comprise, for instance, a fixed disk $21a$ having holes $21b$ and a rotatable disk $21c$, also formed with holes $21d$, adapted for matching the holes $21b$ and controllable by means of a screw $21e$.

Inside the box 19, there are formed, among others, a first path 24 in communication, with one end, with the air intake port 20 through a block 25 of a sound-absorbing material for attenuating vibrations and noise in general, and with the other end, with a centrifugating conduit 26 which extends peripherally to the fan 10.

The conduit 26 outlet communicates with a second conduit 27 formed through the partition 9, which serves for supplying the air from the conduit 26 located on one side of the partition 9 to a centrifugating conduit 28 which extends peripherally to the fan 11 and is located on the other side of the partition 9.

The conduit 28 discharges in turn into a third path 29 which extends partly within the sound-absorbing material 25 as the path 24, and is intended for directly feeding the ports 22 and 23.

To obtain a blue flame, the blower 2 must provide an air feed at a pressure from 500 to 800 mm $H_2O$, preferably from 650 to 800 mm $H_2O$.

The motor 6 is also intended for driving the pump 3 serving for supplying the liquid fuel (i.e. various grades of gas oil, to the exclusion of heavy furnace oil) under pressure to the burner 1.

For an increased efficiency of the burner 1, it is preferable that the gas oil be pre-heated. To this end, the delivery 30 of the pump 3 is connected to one end of a coil 31 (preferably made of copper), the other end whereof is connected to a thermally insulated conduit 32 leading to the burner 1. The coil 31 is wound around, and in thermal exchange relationship with, the motor 6. As it is known an electric motor, when in operation, develops considerable heat, which must be removed and is usually discharged through the environment. The heat developed by the motor 6, owing to the provision of the coil 31, is picked up and transferred to the gas oil flowing through the coil, which gas oil will be heated and function as a coolant fluid for the motor 6.

The burner 1 can be affixed to the blower 2 through bolts 33 which can be inserted through threaded holes 34 in the blower, after being passed through respective holes in the flange 35 of a hollow body 36 constituting the trunk of the burner 1. Inside the hollow body 36, at the mouth 22 of the blower, there is provided a funnel-like union 37, which is effective to direct the air flowing through the aperture 22 into a primary air conduit 38 extending coaxially with the hollow body 36 with respect to the longitudinal axis X—X of the burner 1.

At the inlet end of the conduit 38, there is provided a valve 39 (Figure 2) for regulating and controlling the flow, which valve is driven by an electromagnetic device, generally indicated at 40, in turn controlled by the timer 5. The valve 39 comprises a tee fitting 41, wherein a valve seat 42 is defined inside which there is displaceably mounted, perpendicular (arrow F) to the flow direction, a valving element 43, e.g. comprising a disk having a diameter such as to shut off the span of the seat 42. Preferably, in its position of total arrest of the flow (closed valve), the valving element 43 does not completely obstruct the air passage, but allows a minimal feed of primary air. The minimum position of the valving element 43 in the seat 42 can be adjusted, e.g. by means of a screw (not shown), which penetrates the seat 42 from the outside such as to abut against the valving element 43.

The conduit 38 is terminated, at its outlet end, with an outside thread 44 (Figure 3), whereon a nozzle 45 is threaded which has the same inside diameter as the conduit 38. The nozzle 45 has a calibrated hole 46 adjacent an inner frustoconical portion 47 of the nozzle itself.

Inside the conduit 38 and coaxially thereto, a conduit 48 is provided acting as a gas oil feeding line. The conduit 48 is supported by two setscrews or capscrews 49 which are threaded into the conduit 38 and extend radially through the wall thereof such as to protrude with their tips thereinto, and engage the outer wall of the conduit 48 (Figure 5). Thus, between the inner conduit 48 and the outer one 38, there is defined an annular space 50 for the passage of primary air therethrough from the mouth 22 of the blower 2, through the manifold 37 and valve 39. The primary air directed to the annular space 50 can be pre-heated by a system of electric resistors 51 (Figure 2), e.g. arranged to cover the inner surface of the funnel-like body 37.

The conduit 48 has its end adjacent the valve 39 closed by a thread-on head 52 which is tapered externally and defines, with the inner walls of the conduit, a chamber or receiving seat for a cartridge 53 including an electric resistor. The cartridge resistor 43 has smaller outline dimensions than the inside passage of the conduit 48, thereby between the inner wall of the conduit 48 and the cartridge, there is defined an annular space 54 wherethrough the gas oil from the pump 3 can flow, through the coil 31, conduit 32, and an inlet conduit 55 which communicates, at one end, with the conduit 32, and at the other end, with the space 54. For this purpose, the conduit 55 is connected rigidly to the conduit 48, e.g. by threading it into an embossment 56 on the conduit (48) (Figure 3). The gas oil, inflowing from the conduit 55, flows past the cartridge 53 and along the space 54.

The conduit 48 has on its inside a partition portion 57 having a gas oil passage 58 formed therein. Thus, the gas oil is allowed to flow from the space 53 into a valve seat 59, against which a valve element 60 can abut, e.g. a ball valve element loaded by a spring means such as the coil spring 61, which reacts against a hollow screw 62 threaded into the conduit 48. Also threaded into the conduit 48 are a filter 63 and an atomizer device, generally indicated at 64. The conduit 48 projects from the conduit 38, thereby the atomizer 64 is located within the nozzle 45. The latter is carried in an electrode holder body 65 (Figure 2) coaxial thereto and in turn accommodated inside a sleeve 66 carried by a supporting ring or flange 67. The electrode holder body 65 is locked in position by a stud or captive screw 68 threaded into the sleeve 66, the sleeve 66 being attached to the ring 67 by means of bolts 69. Bolts 70 secure the ring 67 to an end flange 71 on the body 36. Thus, the conduit 48 is supported, on one side, by the screws 49 and on the other side by the conduit 55, whilst the conduit 38 receives support, at one end through the nozzle 45 from the electrode hole body 65, and at its other end from the union 37, through the fitting 41. The conduit 36 is coaxial both to the sleeve 66 and conduits 38 and 48, and has a conical inner portion 72 at its flange 71, the conical portion 72 being convergent towards the axis X—X of the burner.

At the opposite end of the conduit 36, a bore 73 is formed in communication with the mouth or port 23 of the blower 2, for the admission of secondary air. As shown more clearly in Figure 2, the bore 73 comprises a longitudinally extending portion followed by a radially longitudinal portion, thereby an elbow is defined. The radial portion further extends to the outside of the conduit 36 into a block 74 (secured to the conduit 36 by means of bolts 75) and is threaded thereat for receiving a shut-off and throttling screw 76 for the passageway 73. Advantageously, the screw 76 has a knurled head 77 and is locked in position by a knurled internally threaded ring 78. The secondary air is passed, from the mouth 23, into the bore 73 and thence into a gap 79 defined between the inner wall of the conduit 36 and the conduit 38 outside. Thus, the air can expand within the gap 79, thereafter it undergoes a contraction (with consequent velocity increase) at the conical portion 72 of the conduit 36, and of the ring 67. Subsequently, the secondary air flows into an annular chamber 80 defined between a conically divergent wall portion 81 inside the sleeve 66, from the body 65, and a part of the conduit 38 and nozzle 45. Before entering the chamber 80, the secondary air is heated by means of a sleeve type of electric resistor 82 arranged around the conduit 38, preferably at such a position as to extend at the conical portion 72 of the conduit 36. The resistor 82 and cartridge 53 are connected to an electric energy source by means of leads 83 and 84 routed along the conduit 38 inside through an air-tight passageway, generally indicated at 85.

Within the chamber 80, the secondary air undergoes a further expansion prior to entering a combustion chamber 86 through holes 87, 88 and 89 (Figure 4) provided in the electrode holder body 65. The combustion chamber 86 is bordered on one side by the electrode holder body 65 and on the other side by a large nozzle 90 having a conical inside wall 91 and an axial outlet bore 92. The nozzle 90 abuts against a peripheral shoulder 93 on the sleeve 66, and may be secured thereto with set screws 94.

The electrode holder body 65 is seated in the sleeve 66, at a cylindrical inner portion 95 thereof, adjacent the frustoconical portion 81 of the latter. Within the electrode holder body 65, there is also formed a central bore 96, whereinto the nozzle 45 can be inserted. The body 65 has an annular configuration (Figure 2), one face thereof defining a frusto-conical cavity 97 within the combustion chamber 86, while its opposite face is formed with a "V" groove 98 which, together with the frusto-conical wall 81 of the sleeve 66, defines the annular cavity 80. The three holes or bores 87, 88 and 89 in the body 65 extend along inclined directions with respect to the axis X—X. The holes 87 and 88 are intended for loosely accommodating a respective ignition electrode 99, the hole 89 is adapted for receiving a tell-tale or heat detecting electrode (not shown).

As may be seen in Figure 3, between the frusto-conical inner wall 47 of the nozzle 45 and the atomizer 64, there is defined a primary airfuel premixing chamber 100 which communicates with the combustion chamber 86 through the calibrated hole 46 of the nozzle 45.

The burner assembly according to the invention operates as follows.

After connecting the pump 3 to a fuel source (e.g. "standard" gas oil, that is the currently available grade of gas oil, or even a gas oil of higher density than the standard one, that is with a density closer to that of the naphta) and the circuitry 4 to the electric mains, the burner is programmed for a "pre-scavenging" cycle with pressurized air, as required by current regulations. The pre-scavenging cycle, which is a strict requisite with traditional boilers in order to remove any gas traces or residual mix pockets, is dispensed with in the burner of this invention, because the burner will in all cases be pressure operated. It could however, be utilized in order to give the blower 2 (and possibly the electric resistors 53, 37 and 82) time to reach its steady state. That pre-scavenging cycle may last 10 seconds, and is carried out by blowing air from the blower 2 through the hole 73, with the valve element 43 being in its idling position, i.e. in a position of almost full closure. Thereafter, the electrodes 99 will ignite the fuel. After a pre-determined time interval, e.g. a 20-second one, a valve 101 is operated for admitting the fuel, which valve is located on the inlet conduit 32 (Figure 1). The incoming fuel delivered under pressure (e.g. at 15 atmospheres) through the conduit 32, and accordingly through the conduit 55 and into the interspace 54, during the cold starting phase, is preheated by the resistor 53 such as to facilitate from the very beginning (even where the fuel is a fairly thick one) an optimum atomization, and thus a thorough mixing of the fuel. The fuel is then passed through the passageway 58, caused to open the valve 60, to flow through the screw 62, the filter 63, and out from the atomizer 64 to enter the small chamber 100 converging toward the calibrated passageway 46. The chamber 100 communicates frontally with the combustion chamber 86, through the nozzle 46, and directly communicates at the rear, over its entire periphery, with the annular space 50 for the admission of primary air (which during a cold start is preheated by the sleeve resistor 37). Thus, the atomized fuel from the device 64, meets and mixes in the chamber 100 with primary-mix air. However, the atomized gas oil should be prevented from touching the inner walls 47 of the nozzle or cap 45. Along said walls, instead, pressurized primary air is delivered which entrains the atomized gas oil from the tip of the device 64 and mixed homogeneously therewith.

Otherwise, and especially when starting from cold, droplets of gas oil mist would deposit on the wall 47 of the cap 47, where they would revert to the liquid gas oil state and percolate along the cap 45 and conduit 38.

By forcing instead the atomized gas oil to flow through the nozzle 45, being entrained and surrounded by primary air, it is allowed a sufficient time to mix in an optimum manner and to be directed and concentrated along the longitudinal axis of the combustion chamber 86.

The air/fuel mixture, after passing through the calibrated passageway 46, is ignited by the electrodes 99, and burns with a clear flame within the combustion chamber 40 whereinto secondary air is simultaneously admitted through the apertures 87, 88 and 89 provided in the electrode holder body 65.

The secondary air, at least when starting from cold, is in turn preheated by the sleeve resistor 82.

After a short time lapse, e.g. one quarter of a second, the solenoid valve 40 moves the valve element 43 to a fully opened position such as to increase the inflow of primary air. This causes the clear flame or white flame in the combustion chamber 86 to convert into a blue flame.

Shortly afterwards, the timer 5 will switch off the electrodes 99 and then also the resistors 53, 57 and 82.

The secondary air, which can be metered by adjusting the screw 76, once started along the conduit 36, enters a comparatively large receiving space comprising the interspace 79. Before reaching the chamber 80, however, it is forced to flow through a neck defined by the inclined wall 72 of the conduit 36 and the inner surface of the ring 67, thereby it acquites velocity. Thus, the creation of a strong turbulence within the annular chamber 80 is encouraged, from which chamber the secondary air can reach the combustion chamber 86 by flowing between the walls of the holes 87, 88 and 89 in the body 65 and the respective electrodes accommodated therein.

In the proximity of the resistor 82 provided adjacent the inclined wall 72, within the chamber 80 and along the holes 87, 88 and 89, the secondary air is heated, while providing the necessary cooling effect for the electrodes.

The tell-tale or heat detector electrode positioned inside the bore 89 in the electrode holder body 65 has the function of arresting the burner when, after switching off the electrodes 99, no blue flame is formed or the blue flame is extinguished.

The blue flame condition achievement will depend on the condition that almost stoichiometry combustion conditions are maintained through an accurate adjustment of the burner.

More specifically, the blower 2 is effective to feed sufficient amounts (at a suitable pressure) of both primary air and secondary air. For example, to achieve a pressure of about 300 mm $H_2O$ at the outlet port 92 of the combustion chamber 86, one must have a blower 2 available with such a power as to produce a delivery end pressure at 29 of about 500 mm $H_2O$, at a flow rate of 18 to 20 $m^3/min$, in the instance of a 16,000 KCal (64,000 BTU) burner. It is advantageous that the flame emerges from the combustion chamber 86 under pressure, also on account of its being intended for pressurizing the inside of a boiler, furnace or the like heat accumulator wherewith the burner is intended to cooperate.

If the internal pressure in the combustion chamber 86 is too low, the flame cannot come out of the mouth 92 and extinguishes itself. If, by contrast, the pressure within the combustion chamber 86 is excessively high, then the flame does not extinguish itself, but instead of a transparent blue flame, a whitish-blue flame or opaque flame is generated. The passageway for the primary air can be adjusted by suitably changing the diameter of the passage 46 in the nozzle 45, while the secondary air can be adjusted by manipulating the screw 76. In any event, there must be sufficient pressure within the chamber 86 to support combustion. Owing to the design of the combustion chamber 86 which is necked down or tapered toward the aperture 92, with zero pressure therein, once the ignition electrodes 99 have been turned off, the flame would become extinguished. If the pressure were excessively high, the flame would be ejected out of the combustion chamber 86, separate from the burner and disappear. By increasing (within limits) the air pressure inside the combustion chamber 86, a whiter flame is achieved because the combustion occurs in excess air. At the outlet from the passageway 82, the flame goes from a pale blue, almost transparent blue (optimum flame), to a darker and non-transparent blue. Because of the presence of a white flame at the outlet from the combustion chamber, a higher pressure must be provided in the jet of primary air/fuel, e.g. by utilizing a nozzle 45 having a hole 46 of a smaller diameter, or a chamber 100 of a larger size, or even a combination thereof, such as to shorten the length of the mixing region.

If the flame happens to be too blue (dark blue), then one can manipulate the screw 76 to control the inflow of secondary air.

The flame colour is also affected by the length and/or diameter of the combustion chamber 86, as well as by the dimensions of the outlet hole 92. If the combustion chamber is too narrow, the flame may roar or misfire because it is not allowed to expand to a sufficient extent. If, by contrast, it is excessively wide, then the white flame will prevail over the blue one. If the combustion chamber 86 is too short, the flame extinguishes itself. The blue flame, if meeting with obstructions or not sufficiently pressurized, takes a pinky blue colour and releases carbon monoxide and consequently soot. On the contrary, if the combustion chamber 86 is too long, no serious problems are encountered, although the length limit for the combustion chamber will also be dictated by the diameter of the hole 92 as well as by the velocity of the air/fuel mixture and overall volume of the combustion chamber itself. If the combustion chamber 40 happens to be excessively long, then the flame may break or separate into segments, or even go off.

The diameter of the outlet hole 92 will depend directly on the required volume for a complete combustion within the the combustion chamber, but must be, in all cases, such as to provide for the maintaining of a sufficient pressure inside the combustion chamber to allow the flame to come out in the form of a uniformly blown jet 102 (Figure 1), concentrated in an almost cylindrical axial region which may reach a length of 25—30 cm.

The optimum blue (transparent blue) flame is already blue prior to exiting the mouth 92 of the combustion chamber 86, whereas inside the combustion chamber the white flame prevails. To achieve an optimum blue flame, it is also important to control the dimensional relationship between the passageway 46 of the nozzle 45 and hole 92 in the combustion chamber. The selection and adjustment criterion for said relationship may be illustrated by an example.

Supposed that, for the passageway 46, a diameter of 14 mm (0,55") has been selected and that, during the adjustment of the burner 1, from the mouth 92 a flame emerges having a color which varies from dark blue to red. Then, it is possible to adjust, by screwing in or out the cap 45, the distance between the hole 46 and outlet aperture 92. Should the flame fail to become a transparent blue flame, then the cap 8 may be replaced with one having a nozzle 45 of a different diameter, or it may be even possible to change the diameter of the mouth 92 by replacing the outlet 90. Furthermore, depending on whether the burner is utilized with a heat accumulator, a boiler, furnace, or the like, operated under pressure by the blue flame emerging therefrom, or utilized as an open flame, dart-like fashion, one can also adjust the volume and/or pressure of the air fed by the blower 2, e.g. by manipulating the valve 21.

The invention as described is susceptible to many modifications and variations without departing from the spirit and true scope of the instant inventive concept, as shown hereinabove and claimed in the appended claims.

## Claims

1. A liquid fuel burner for generating a blue clear flame, comprising a combustion chamber (86) having a calibrated aperture for blowing a blue flame outwardly therefrom, a conduit for supplying fluid fuel under pressure to the combustion chamber, a fuel atomizer (64) located at the end of the fuel feeding conduit, in the area around the atomiser (64) a pre-mixing chamber (100) of adjustable size and communicating with the combustion chamber (86) through a calibrated passageway (46), a conduit for feeding pressurized primary air opening at the area around the atomizer (64), a conduit for feeding pressurized secondary air into the combustion chamber, and means for igniting the flame and/or controlling the burner, characterized in that it comprises a multistaged blower (2) for feeding pressurized primary and secondary air having two side members (7, 8) and a partition-spacer element (9) intended for defining together with the side members two inner cavities (26, 28) in communication with each other through a passageway (27) in the partition-spacer element, a first impeller or fan (10) rotatably mounted in a cavity (26) and a second impeller or fan (11) mounted in the other cavity (28), an air inlet passageway (24) leading to one cavity (26) and a delivery air passageway (29) extending from the other cavity (28) to the paths (50, 79) for the burner primary and secondary air, and control valving means (21) located in the air admission passageway.

2. A burner according to Claim 1, characterized in that it comprises an electric motor (6) for driving the blower (2), and a path portion (31) for feeding the fuel, said portion including a conduit arranged in thermal exchange relationship with the electric motor, thereby the fuel acts as a coolant for the electric motor (6) and is preheated prior to reaching the combustion chamber.

3. A burner according to Claims 1, 2, characterized in that said conduit (31) comprises a coil portion made of metal and arranged around the electric motor.

4. A burner according to Claims 1—3, characterized in that it comprises in addition a deadening material (25) arranged around the air inlet passageway (24) and the air delivery passageway (29) to attenuate the noise.

## Patentansprüche

1. Brenner für flüssigen Brennstoff zur Erzeugung einer blauen Flamme, mit einer Brennkammer (86) mit kalibrierter Öffnung zum Ausblasen einer blauen Flamme, einer Leitung zur Zuführung eines Brennstoffes unter Druck zur Brennkammer, einem Brennstoffzerstäuber (64), der am Ende der Brennstoffzuführungsleitung angeordnet ist, einer im Raum um den Zerstäuber (64) vorgesehenen, in ihrer Größe verstellbaren und mit der Brennkammer (86) über einen kalibrierten Durchlaß (46) verbundenen Vormischkammer (100), einer in den Raum um den Zerstäuber (64) mündenden Leitung zur Zuführung von unter Druck stehender Primärluft, einer Leitung zur Zuführung von unter Druck stehender Sekundärluft in die Brennkammer, und Einrichtungen zum Zünden der Flamme und/oder zur Steuerung des Brenners, dadurch gekennzeichnet, daß et zur Zuführung von unter Druck stehender Primär- und Sekundärluft ein Mehrstufengebläse (2) mit zwei Seitenteilen (7, 8) und einem Trenn- und Abstandselement (9), welches dazu bestimmt ist, zusammen mit den Seitenteilen zwei Innenhohlräume (26, 28) zu begrenzen, die miteinander über einen Durchlaß (27) im Trenn- und Abstandselement verbunden sind, ein erstes Flügelrad oder Windrad (10), das drehbar im Hohlraum (26), und ein zweites Flügelrad oder Windrad (11), das drehbar im anderen Hohlraum (28) montiert ist, einen zu dem einen Hohlraum (26) führenden Lufteinlaßkanal (24) und einen von anderen Hohlraum (28) zu den Durchlässen (50, 79) für die Brennerprimärluft und die Brennersekundärluft führenden Luftkanal (29) sowie Kontrolleinrichtungen (21), die im Luftzuführungskanal angeordnet sind, aufweist.

2. Brenner nach Anspruch 1, dadurch gekennzeichnet, daß et einen Elektromotor (6) für den Antrieb des Gebläses (2) und eine Leitung (31) für die Brennstoffzuführung aufweist, welche einen im Wärmeaustausch mit dem Elektromotor stehenden Leitungsabschnitt einschließt, so daß der Brennstoff als Kühlmittel für den Elektromotor (6) wirkt und vor dem Erreichen der Brennkammer (86) vorgewärmt wird.

3. Brenner nach den Ansprüchen 1, 2, dadurch gekennzeichnet, daß die genannte Leitung (31) einen aus Metall bestehenden, um den Elektromotor herum angeordneten Schlangenabschnitt aufweist.

4. Brenner nach den Ansprüchen 1—3, dadurch gekennzeichnet, daß er zusätzlich eine Dämpfungsmaterial (25) aufweist, das um den Lufteinlaßkanal (24) und den Luftabgabekanal (29) zwecks Verminderung des Lärmes angeordnet ist.

**Revendications**

1. Brûleur à combustible liquide pour la formation d'une flamme bleue claire, comportant une chambre de combustion (86), avec une ouverture calibrée pour le soufflage vers l'extérieur d'une flamme bleue, une conduite d'alimentation de combustible liquide sous pression à la chambre de combustion, un atomiseur de combustible (64) situé à l extrémité de la conduite d'alimentation en combustible, dans la zone autour de l'atomiser (64), une chambre de pré-mixage (100) de dimensions réglables et communiquant avec la chambre de combustion (86) par une passage calibré (46), une conduite d'alimentation d'air primaire sous pression s'ouvrant dans la zone autour de l'atomiseur (64), une conduite d'alimentation d'air secondaire sous pression dans la chambre de combustion et des moyens pour allumer la flamme et/ou contrôler le brûleur, caractérisé en ce qu'il comporte une soufflerie multiple (2) d'alimentation d'air primaire et secondaire sous pression avec deux parties latérales (7, 8) et un élément de cloisonnement (9) prévu pour définir avec les parties latérales deux cavités internes (26, 28) communiquant l'une avec l'autre par un passage (27) dans l'élément de cloisonnement, une première turbine ou ventilateur (10) monté en rotation dans l'une des cavités (26) et une seconde turbine ou ventilateur (11) monté dans l'autre cavité (28), un passage d'arrivée d'air (24) conduisant à l'une des cavités (26) et un passage de sortie d'air (29) allant de l'autre cavité (28) aux trajets (50, 79) pour l'air primaire et secondaire du brûleur et des moyens de contrôle de distribution (21) situés dans le passage d'admission d'air.

2. Brûleur selon la revendication 1, caractérisé en ce qu'il comporte un moteur électrique (6) pour l'entraînement de la soufflerie (2) et une partie de trajet (31) pour l'alimentation du combustible, ladite partie comprenant un conduite disposée en relation d'échange thermique avec le moteur électrique, le combustible agissant ainsi comme agent refroidissant du moteur électrique (6) et étant préchauffe avant d'arriver à la chambre de combustion (86).

3. Brûleur selon la revendication 1 et la revendication 2, caractérisé en ce que ladite conduite (31) comporte une partie en serpentin, réalisée en métal et disposée autour du moteur électrique.

4. Brûleur selon l'une des revendication 1 à 3, caractérisé en ce qu'il comporte de plus un matériau amortisseur (25) disposé autour du passage d'entrée de l'air (24) et du passage de sortie de l'air (29) pour atténuer le bruit.

FIG.6

FIG.5

FIG.4

FIG.1

FIG.7

FIG.3

FIG.2